# EUROPÄISCHE PATENTSCHRIFT

(11) **EP 3 351 804 B1**
(45) Veröffentlichungstag und Bekanntmachung des Hinweises auf die Patenterteilung: **27.11.2019**
(21) Anmeldenummer: 18151581.8
(22) Anmeldetag: 15.01.2018
(51) Int. Cl.: F04D 29/26, F04D 29/66, B60H 1/22, F04D 29/02, F04D 29/053, F04D 29/28

(54) **HEIZLUFTFÖRDERRAD**
HEATING AIR IMPELLER
ROUE D'ALIMENTATION DE L'AIR DE CHAUFFAGE

(30) Priorität: 17.01.2017 DE 102017100800
(43) Veröffentlichungstag der Anmeldung: 25.07.2018
(73) Patentinhaber: Eberspächer Climate Control Systems GmbH & Co. KG, 73730 Esslingen (DE)
(72) Erfinder: Haefner, Michael, 70469 Stuttgart (DE); Jensen, Hans, 73265 Dettingen (DE); Dering, Oleg, 70176 Stuttgart (DE); Rösch, Henry, 71065 Sindelfingen (DE)
(74) Vertreter: Ruttensperger Lachnit Trossin Gomoll

(56) Entgegenhaltungen:
- DE-A1- 19 754 369
- DE-A1- 19 905 075
- DE-U1-202004 015 442
- US-A1- 2002 110 455

## Beschreibung

Die vorliegende Erfindung betrifft ein Heizluftförderrad für ein Fahrzeugheizgerät, umfassend eine Nabe zur Festlegung des Heizluftförderrads an einer Antriebswelle und einen in einem Übergangsbereich an die Nabe anschließenden Förderbereich mit einer Mehrzahl von in Umfangsrichtung um eine Förderrad-Längsachse aufeinander folgend angeordneten Förderschaufeln.

Ein Fahrzeugheizgerät mit einem derart aufgebauten Heizluftförderrad ist aus der DE 20 2004 015 442 U1 bekannt. Dieses in Fig. 1 dargestellte Fahrzeugheizgerät 10 dient zur Erwärmung der beispielsweise in einem Fahrzeuginnenraum einzuleitenden Luft und umfasst in einem Gehäuse 12 einen Gebläsebereich 14 und einen Brennerbereich 15. Der Gebläsebereich 14 umfasst ein im dargestellten Ausgestaltungsbeispiel als Seitenkanalgebläse ausgebildetes Verbrennungsluftgebläse 16 mit einem Verbrennungsluftförderrad 18 und ein Heizluftgebläse 20 mit einem Heizluftförderrad 22. Das Heizluftförderrad 22 ist an einem ersten axialen Endbereich einer Motorwelle 24 eines als Elektromotor ausgebildeten Gebläsemotors 26 getragen. Das Verbrennungsluftförderrad 18 ist am zweiten axialen Endbereich der Motorwelle 24 getragen. Im Betrieb des Gebläsemotors 26 dreht die Motorwelle 24 sich um eine Drehachse D, so dass auch das Heizluftförderrad 22 und das Verbrennungsluftförderrad 18 um diese Drehachse D rotieren. Dabei wird durch das Verbrennungsluftförderrad 18 Verbrennungsluft in Richtung zu einer Brennkammerbaugruppe 28 des Brennerbereichs 15 gefördert und wird darin mit ebenfalls in die Brennkammerbaugruppe 28 eingespeisten Brennstoff verbrannt. Die bei dieser Verbrennung entstehenden Verbrennungsabgase strömen entlang eines Flammrohrs 30 und entlang der Innenoberfläche eines Wärmetauschergehäuses 32 zu einem Verbrennungsabgasauslass 34. Die durch das Heizluftförderrad 22 bzw. daran vorgesehene Förderschaufeln 36 geförderte Heizluft strömt im Inneren des Gehäuses 12 entlang der Außenseite des Gebläsemotors 26 von einer Heizlufteintrittsöffnung 38 zu einer im Bereich des Wärmetauschergehäuses 30 gebildeten Heizluftaustrittsöffnung 40. Dabei umströmt die Heizluft die Außenseite des Wärmetauschergehäuses 32, insbesondere daran auch vorgesehene Wärmeübertragungsrippen 42, und verlässt das Fahrzeugheizgerät 10 somit im Bereich der Heizluftaustrittsöffnung 40 in erwärmtem Zustand.

Das Heizluftförderrad 22 ist mit einer Nabe 44 mit einer darin ausgebildeten zentralen Öffnung 46 aufgebaut. In diese zentrale Öffnung 46 ist der erste axiale Endbereich der Motorwelle 24 beispielsweise unter Presspassung eingeschoben, so dass eine stabile Anbindung des Heizluftförderrads 22 an die Motorwelle 24 gewährleistet ist. in einem in Umfangsrichtung unterbrechungsfrei an die Nabe 44 anschließenden Übergangsbereich 48 ist die Nabe 44 an einen radial außen folgenden Förderbereich 50 des Förderrads angebunden. Der Förderbereich 50 umfasst eine schirmartig bzw. hohlkegelstumpfartig ausgebildete und von der Heizlufteintrittsöffnung 38 weiter entfernt liegende erste Wandung 52 und in axialem Abstand dazu und der Heizlufteintrittsöffnung 38 näher liegend eine ebenfalls im Wesentlichen schirmartig ausgebildete zweite Wandung 54. In einem zentralen Bereich der zweiten Wandung 54 geht diese zum Bereitstellen einer Heizluftaufnahmeöffnung 56 in einen im Wesentlichen zylindrischen Abschnitt 58 über. Zwischen den beiden Wandungen 52, 54 erstrecken die im Umfangsrichtung aufeinanderfolgend angeordneten Förderschaufeln 36 sich von radial innen nach radial außen, so dass zwischen jeweils zwei in Umfangsrichtung aufeinander folgenden Förderschaufeln 36, der ersten Wandung 52 und der zweiten Wandung 54 jeweils ein Heizluftförderkanal 60 gebildet ist. Im Rotationsbetrieb wird durch die Förderwirkung der Förderschaufeln 36 die im Bereich der Heizlufteintrittsöffnung 38 in das Gehäuse 12 und im Bereich der Heizluftaufnahmeöffnung 56 in das Heizluftförderrad 22 eintretende Luft nach radial außen gefördert und unter erhöhtem Druck im radial äußeren Umfangsbereich des Heizluftförderrads 22 abgegeben.

Das Heizluftförderrad 22 ist bei diesem bekannten Aufbau mit der Nabe 44, dem Übergangsbereich 48 und dem Förderbereich 50 als ein integrales Bauteil bereitgestellt. Durch den die Nabe 44 mit dem Förderbereich 50 verbindenden, in Umfangsrichtung unterbrechungsfrei durchlaufenden Übergangsbereich 48 ist gewährleistet, dass im Übergang zwischen der ersten Wandung 52 und der Nabe 44 kein Verlust an in das Heizluftförderrad 22 eintretender Heizluft erfolgt, also die gesamte in Richtung der Drehachse D in das Heizluftförderrad 22 eintretende Luft nach radial außen umgelenkt und ins Innere des Gehäuses 12 gefördert wird.

Ein Heizluftförderrad gemäß dem Oberbegriff des Anspruchs 1 ist aus der US 2002/0110455 A1 bekannt.

Es ist die Aufgabe der vorliegenden Erfindung, ein Heizluftförderrad für ein Fahrzeugheizgerät vorzusehen, bei welchem die Übertragung von Schwingungen eines Gebläsemotors auf den Förderbereich des Heizluftförderrads im Wesentlichen unterdrückt ist.

Erfindungsgemäß wird diese Aufgabe gelöst durch ein Heizluftförderrad für ein Fahrzeugheizgerät gemäß Anspruch 1. Dieses umfasst eine Nabe zur Festlegung des Heizluftförderrads an einer Antriebswelle und einen in einem Übergangsbereich an die Nabe anschließenden Förderbereich mit einer Mehrzahl von in Umfangsrichtung um eine Förderrad-Längsachse aufeinanderfolgend angeordneten Förderschaufeln.

Das erfindungsgemäße Heizluftförderrad zeichnet sich dadurch aus, dass der Übergangsbereich eine Mehrzahl von in Umfangsrichtung um die Förderrad-Längsachse aufeinanderfolgenden Verbindungsstegen umfasst.

Um eine Beeinträchtigung der Fördereffizienz des Heizluftförderrads zu vermeiden, sind im Übergangsbereich zwischen der Nabe, dem Förderbereich und den Verbindungsstegen gebildete Zwischenräume wenigstens teilweise, vorzugsweise vollständig mit Füllmaterial gefüllt.

Eine Beeinträchtigung der Schwingungsentkopplungsfunktionalität des bei dem erfindungsgemäß aufgebauten Förderrad vorgesehenen Übergangsbereichs durch das Füllmaterial wird dadurch vermieden, dass das Füllmaterial einen größeren Elastizitätsmodul aufweist, als das Aufbaumaterial der Nabe oder/und das Aufbaumaterial der Verbindungsstege oder/und das Aufbaumaterial des Förderbereichs. Dies bedeutet, dass das Füllmaterial eine größere Elastizität aufweist, bei Krafteinleitung also eine stärkere Verformung erfahren kann und somit leichter verformbar ist, als beispielsweise zum Aufbau des Förderbereichs eingesetztes Material.

Durch die Ausgestaltung des Übergangsbereichs mit mehreren die Nabe mit dem Förderbereich verbindenden Verbindungsstegen wird die Flexibilität des Förderrads in diesem Bereich wesentlich erhöht. An einer Motorwelle eines Gebläsemotors entstehende und möglicherweise in die Nabe übertragene Schwingungen werden im Übergangsbereich aufgrund der durch die Verbindungsstege bereitgestellten Schwingungsentkopplung gedämpft bzw. im Wesentlichen nicht auf den Förderbereich übertragen. Somit ist die Gefahr, dass derartige Schwingungen im Förderbereich zu einer entsprechenden Schwingungsanregung der geförderten Heizluft führen können, im Wesentlichen ausgeschlossen.

Für einen besonders einfach herzustellenden, gleichwohl jedoch die gewünschte Schwingungsentkopplungsfunktionalität verkörpernden Aufbau des Heizluftförderrads wird vorgeschlagen, dass der Förderbereich mit der Nabe und den Verbindungsstegen einteilig ausgebildet ist. Insbesondere kann dabei der Förderbereich mit der Nabe und den Verbindungsstegen als Kunststoff-Gussteil, vorzugsweise aus thermoplastischem Elastomer-Aufbaumaterial, ausgebildet sein.

Das Heizluftförderrad kann zum Bereitstellen eines effizienten Förderbetriebs beispielsweise derart aufgebaut sein, dass der Förderbereich eine vermittels der Verbindungsstege mit der Nabe verbundene, schirmartig ausgebildete erste Wandung mit einer zentralen Nabenanbindungsöffnung und eine zur ersten Wandung in axialem Abstand angeordnete, schirmartig ausgebildete zweite Wandung mit einer zentralen Heizluftaufnahmeöffnung umfasst, wobei die Förderschaufeln sich zwischen der ersten Wandung und der zweiten Wandung von radial innen nach radial außen erstrecken, derart, dass durch jeweils zwei in Umfangsrichtung aufeinanderfolgende Förderschaufeln, die erste Wandung und die zweite Wandung ein zur Heizluftaufnahmeöffnung offener Heizluftförderkanal begrenzt ist.

Um dabei einen bündigen Anschluss der Nabe an den Förderbereich vermittels des Füllmaterials bereitstellen zu können, wird weiter vorgeschlagen, dass die Nabe sich durch die Nabenanbindungsöffnung hindurch erstreckt.

Der bündige, eine Beeinträchtigung der Heizluftströmung im Wesentlichen ausschließende Anschluss des Füllmaterials an den Förderbereich bzw. die Nabe kann beispielsweise dadurch realisiert sein, dass das Füllmaterial eine der Heizluftaufnahmeöffnung zugewandt orientierte, zwischen der Nabe und der ersten Wandung sich erstreckende Verbindungsfläche bereitstellt, wobei die Verbindungsfläche in ihrem radial äußeren Endbereich im Wesentlichen stufenfrei oder/und knickfrei an eine den Förderschaufeln zugewandte Oberfläche der ersten Wandung anschließt oder/und in ihrem radial inneren Endbereich im Wesentlichen stufenfrei oder/und knickfrei an die Nabe, vorzugsweise an eine Außenumfangsfläche der Nabe, anschließt.

Die vorliegende Erfindung betrifft ferner ein Fahrzeugheizgerät, umfassend einen Gebläsemotor mit einer um eine Drehachse drehbaren Motorwelle, wobei an einem ersten axialen Endbereich der Motorwelle ein Heizluftförderrad mit erfindungsgemäßem Aufbau getragen ist.

An einem zweiten axialen Endbereich der Motorwelle kann ein Verbrennungsluftförderrad getragen sein.

Die vorliegende Erfindung wird nachfolgend mit Bezug auf die beiliegenden Figuren detailliert beschrieben. Es zeigt:
- Fig. 1: eine Längsschnittansicht eines aus dem Stand der Technik bekannten Fahrzeugheizgeräts;
- Fig. 2: eine Axialansicht eines Heizluftförderrads für ein Fahrzeugheizgerät, betrachtet von einer von einem Gebläsemotor abgewandt zu positionierenden Seite;
- Fig. 3: eine perspektivische Ansicht des Heizluftförderrads der Fig. 2, betrachtet von der von einem Gebläsemotor abgewandt zu positionierenden Seite;
- Fig. 4: eine weitere perspektivische Ansicht des Heizluftförderrads der Fig. 2, betrachtet von einer einem Gebläsemotor zugewandt zu positionierenden Seite;
- Fig. 5: eine Längsschnittansicht des Heizluftförderrads der Fig. 2, geschnitten längs einer Linie V-V in Fig. 2;
- Fig. 6: eine der Fig. 5 entsprechende Längsschnittansicht eines gemäß den Prinzipien der vorliegenden Erfindung aufgebauten Heizluftförderrads mit in einem Übergangsbereich vorgesehenem Füllmaterial, geschnitten zwischen zwei in Umfangsrichtung aufeinanderfolgenden Verbindungsstegen;
- Fig. 7: das Förderrad der Fig. 6 in perspektivischer Ansicht, betrachtet von der von einem Gebläsemotor abgewandt zu positionierenden Seite.

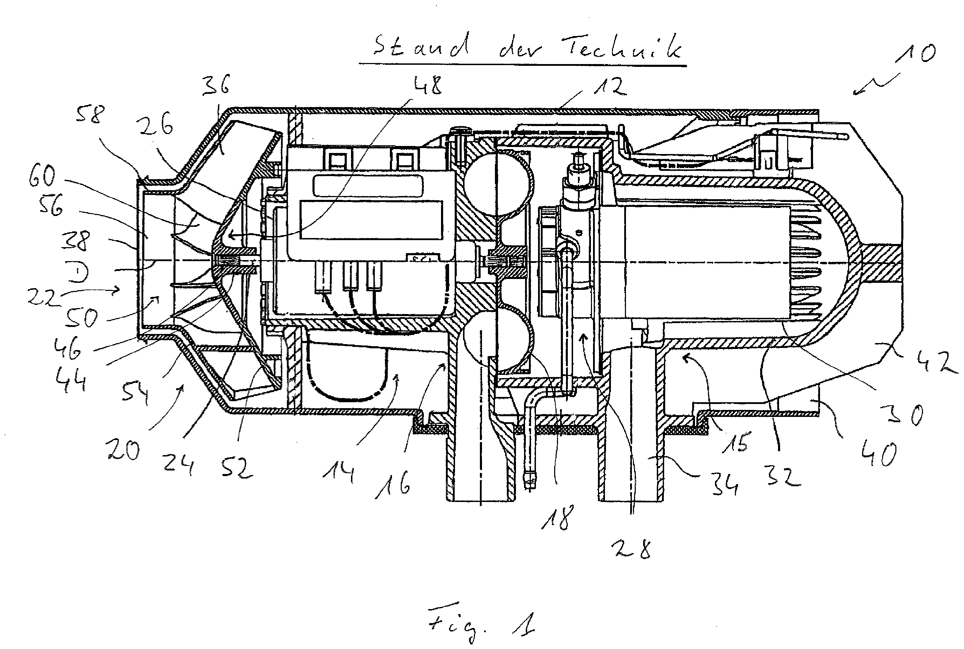

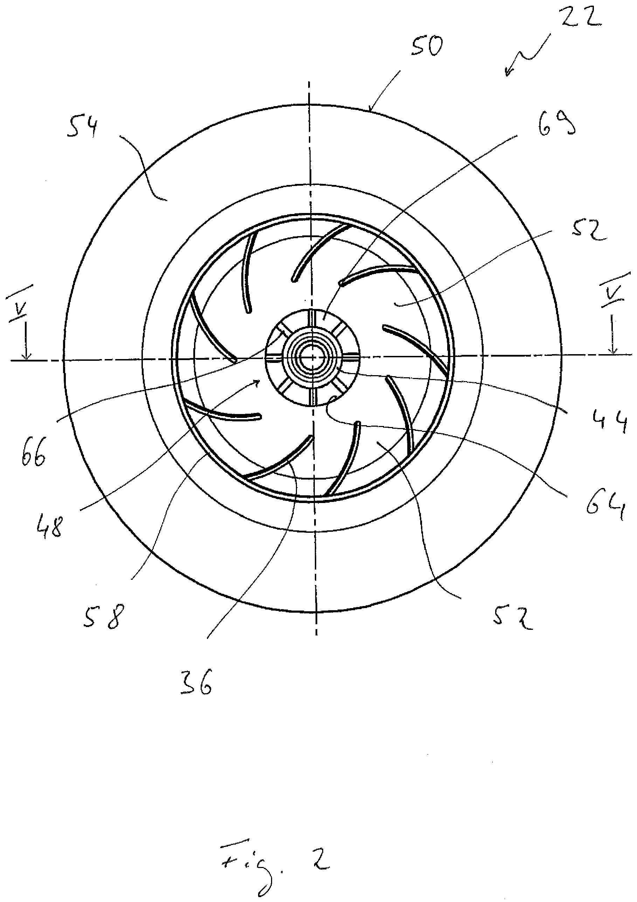

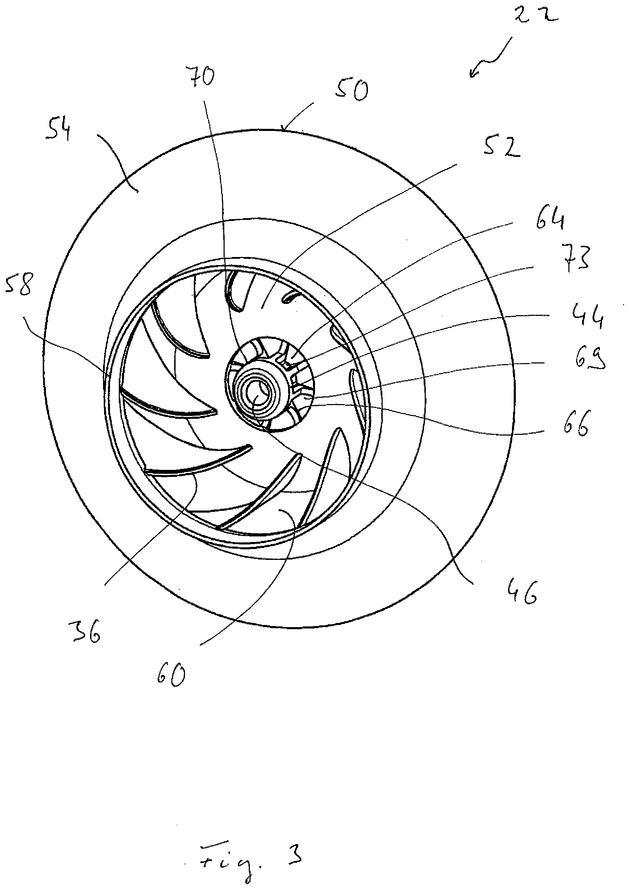

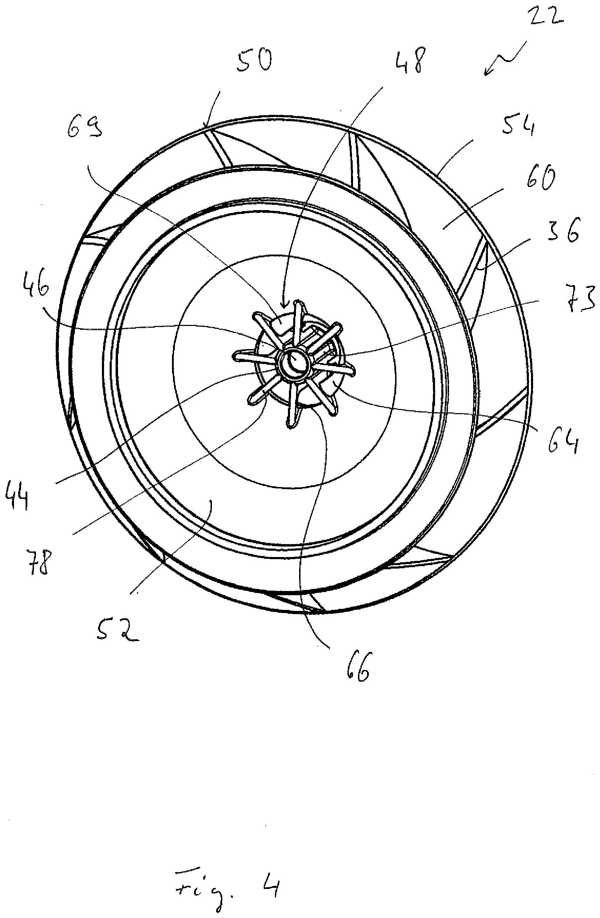

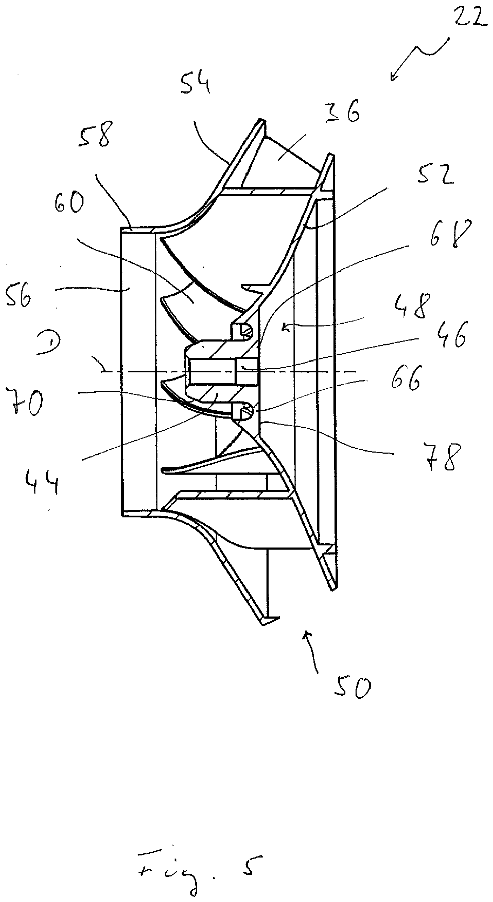

Bevor im Folgenden mit Bezug auf die Fig. 2-7 der Aufbau eines Heizluftförderrads detailliert beschrieben wird, sei darauf hingewiesen, dass ein derartiges Heizluftförderrad bei einem Fahrzeugheizgerät eingesetzt werden kann, wie es beispielsweise in Fig. 1 dargestellt ist. Zum Aufbau eines derartigen Fahrzeugheizgeräts kann daher auf die voranstehenden Ausführungen zu dem in Fig. 1 dargestellten Fahrzeugheizgerät verwiesen werden. Komponenten, welche vorangehend mit Bezug auf die Fig. 1 bereits beschriebenen Komponenten hinsichtlich Aufbau bzw. Funktionalität entsprechen, sind nachfolgend mit den gleichen Bezugszeichen bezeichnet.

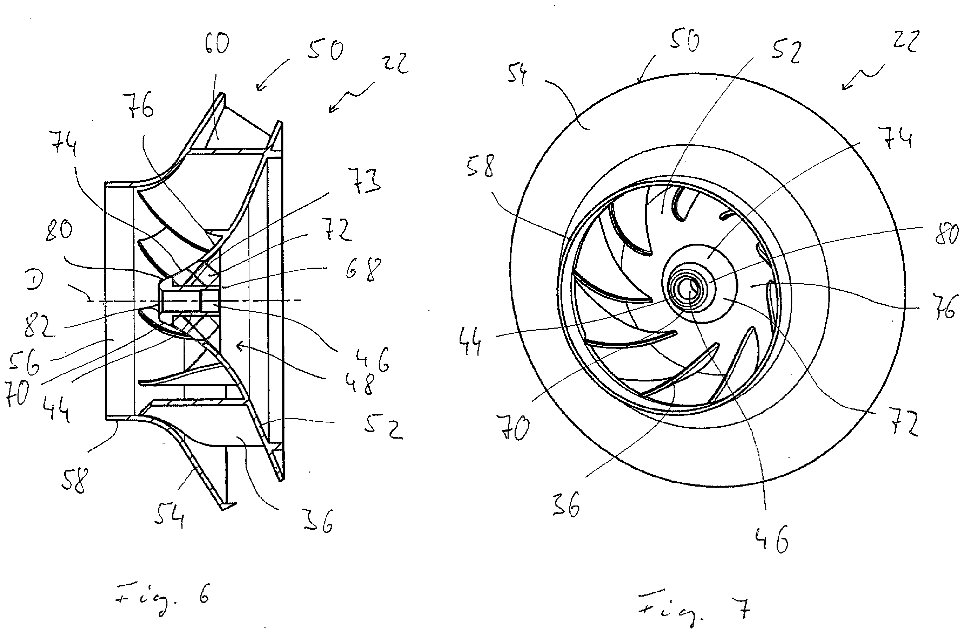

Die Fig. 2 bis 7 zeigen verschiedene Ausgestaltungen eines Heizluftförderrads, wobei die Fig. 6 und 7 ein gemäß den Prinzipien der vorliegenden Erfindung aufgebautes Heizluftförderrad 22 darstellen. Auch dieses ist mit den beiden im Wesentlichen axial einander gegenüberliegenden bzw. in axialem Abstand zueinander angeordneten schirmartig bzw. hohlkegelstumpfartig ausgebildeten Wandungen 52, 54 aufgebaut, wobei die zweite Wandung 54 in ihrem zentralen Bereich in den im Wesentlichen zylindrischen Abschnitt 58 übergeht und dort die Heizluftaufnahmeöffnung 56 bereitstellt. Zwischen den in Umfangsrichtung aufeinanderfolgenden Förderschaufeln 36 und den beiden Wandungen 52, 54 sind die von radial innen nach radial außen in Richtung der im Wesentlichen auch der Drehachse D entsprechenden Förderrad-Längsachse nach stromabwärts angewinkelt sich erstreckenden Förderkanäle 60 gebildet.

Die erste Wandung 52 weist in ihrem zentralen Bereich eine Nabenanbindungsöffnung 64 auf, durch welche die von der ersten Wandung 52 im Wesentlichen entkoppelt ausgebildete Nabe 44 sich hindurcherstreckt. Der Übergangsbereich 48, über welchen die Nabe 44 mit der ersten Wandung 52 verbunden ist, umfasst eine Mehrzahl von von der Nabe 44 nach radial außen sich erstreckenden und in ihrem radial äußeren Endbereich an die erste Wandung 52 anschließenden Verbindungsstegen 66. Die Verbindungsstege 66 sind in sternartiger bzw. kreuzartiger Konfiguration angeordnet und erstrecken sich im Wesentlichen in radialer Richtung, ausgehend von einem einen Gebläsemotor zugewandt zu positionierenden axialen Endbereich 68 der Nabe 44.

Die Nabe 44 kann mit dem Übergangsbereich 48, also den Verbindungsstegen 66, und dem Förderbereich 50, also den beiden Wandungen 52, 54 und den dazwischen liegenden Förderschaufeln 36 einteilig ausgebildet sein, also durch einen integralen Materialblock bereitgestellt sein und kann beispielsweise aus Kunststoffmaterial, vorzugsweise thermoplastischem Elastomer-Aufbaumaterial in einem Gussverfahren, beispielsweise einem Druckgussverfahren, hergestellt werden.

Durch die Verbindung der Nabe 44 mit der ersten Wandung 52 und somit dem Förderbereich 50 vermittels der Verbindungsstege 66 wird eine Schwingungsentkopplung zwischen der Nabe 44 und dem Förderbereich 50 erreicht. Im Bereich der Motorwelle 24 entstehende bzw. in die Nabe 44 eingeleitete Schwingungen, insbesondere auch Taumelschwingungen, werden somit im Wesentlichen nicht auf die erste Wandung 52 und somit den Förderbereich 60 übertragen. Dabei kann die Anzahl und die Querschnittsdimensionierung bzw. auch die Formgebung der Verbindungsstege 66 angepasst an die Größe und die Frequenz der im Bereich der Motorwelle 24 zu erwartenden Schwingungen ausgewählt werden, um eine optimale Schwingungsentkopplung zwischen der Nabe 44 und dem Förderbereich 50 zu erreichen.

Wie insbesondere in den Fig. 2-4 erkennbar, ist aufgrund der Anbindung des Förderbereichs 50 über die Verbindungsstege 66 an die Nabe 44 zwischen dem zentralen Bereich des Förderbereichs 50 und der Nabe 44 eine Mehrzahl von Zwischenräumen 69 gebildet, durch welche über die Heizluftaufnahmeöffnung 56 in das Heizluftförderrad 22 eintretende Luft in Richtung zum Gebläsemotor hin entweichen könnte. Dies würde die Fördereffizienz des Heizluftförderrads 22 bzw. allgemein des mit diesem aufgebauten Heizluftgebläses 20 beeinträchtigen. Um dies zu vermeiden, sind die zwischen den Verbindungsstegen 66 bzw. dem radial inneren Endbereich der ersten Wandung 52 und der Außenumfangsfläche 70 der Nabe 44 gebildeten Zwischenräume 69 mit Füllmaterial 72 gefüllt. Dieses in den Fig. 6 und 7 erkennbare Füllmaterial 72, welches beispielsweise Zweikomponenten-Elastomermaterial sein kann, ist so ausgewählt, dass es einen höheren Elastizitätsmodul aufweist, als das Aufbaumaterial der Nabe 44 bzw. des Förderbereichs 50 und der Verbindungsstege 66. Das Füllmaterial 72 beeinträchtigt somit die durch die erfindungsgemäße Ausgestaltung des Übergangsbereichs 48 eingeführte Schwingungsentkopplungsfunktionalität nicht. Vielmehr lässt es eine Relativbewegung zwischen dem Förderbereich 50 und der Nabe 44 zu und führt aufgrund seiner Elastizität bzw. Verformbarkeit eine Dämpfungsfunktionalität ein, so dass die Übertragung von Schwingungen von der Nabe 44 auf den Förderbereich 50 über die Verbindungsstege 66 noch stärker unterdrückt wird. Zur Erhöhung der Anbindungsfestigkeit des Füllmaterials 72 an die Nabe 44 sind an der Nabe 44 in Umfangsrichtung zwischen den Verbindungsstegen 66 radiale Einsenkungen 73 gebildet, in welche das Füllmaterial 72 beim Ausfüllen der Zwischenräume 69 eindringt. Nach dem Aushärten des Füllmaterials 72 ist somit auch zur Nabe 44 ein in Umfangsrichtung und in axialer Richtung wirksamer Formschluss generiert.

Um durch das Füllmaterial 72 eine definierte und im Wesentlichen unbeeinträchtigte Durchströmung des Heizluftförderrads 22 mit der durch dieses zu fördernden Heizluft zu gewährleisten, ist eine der zweiten Wandung 54 bzw. der Heizluftaufnahmeöffnung 56 zugewandte Verbindungsfläche 74 des Füllmaterials 72 so geformt bzw. ausgebildet, dass in ihrem radial äußeren Bereich diese Verbindungsfläche 74 im Wesentlichen bündig, also stufenfrei, und im Wesentlichen knickfrei an eine der zweiten Wandung 54 zugewandte Oberfläche 76 der zweiten Wandung 52 anschließt.

Die Verbindungsfläche 74 ist nach radial einwärts dann in Richtung stromaufwärts, also zur Heizluftaufahmeöffnung 56 hin gekrümmt und schließt in ihrem radial inneren Endbereich im Wesentlichen stufenfrei bzw. knickfrei an die Außenumfangsfläche 70 der Nabe 44 an. In Richtung stromabwärts, also auf den axialen Endbereich 68 der Nabe 44 zu füllt das Füllmaterial 72 die zwischen der Nabe 44, der ersten Wandung 52 und den Verbindungsstegen 66 gefüllten Zwischenräume 69 vorzugsweise bis zu den Verbindungsstegen 66 hin auf, so dass eine in Richtung zu dem Gebläsemotor 26 hin zu positionierende Rückseite 78 der Verbindungsstege 66 bündig mit einer Rückseite des Füllmaterials 72 abschließt. Dabei kann das Füllmaterial 72 nach radial außen hin die erste Wandung 52 in ihrem radial inneren Endbereich teilweise hintergreifend vorgesehen sein.

Die Verbindungsstege 66 sind so geformt, dass sie zusammen mit der ersten Wandung 52 und der Nabe 44 die radial zwischen der Außenumfangsfläche 70 der Nabe 44 und dem radial inneren Endbereich der ersten Wandung 52 gebildeten Zwischenräume 69 in axialer Richtung im Wesentlichen bogenartig begrenzen. Das Füllmaterial 72 füllt diesen Zwischenraum vollständig aus und schließt radial außen mit seiner Verbindungsfläche 74 bündig an die Oberfläche 76 der ersten Wandung 52 an und schließt radial innen an die Außenumfangsfläche 70 der Nabe 44 bündig bzw. stufenfrei an, wobei die Außenumfangsfläche 70 der Nabe 44 in einem an die Verbindungsfläche 74 anschließenden bzw. diese fortsetzenden Flächenabschnitt 80 derart geformt ist, dass sie die Verbindungsfläche 74 in Richtung auf einen stromaufwärtigen Endbereich 82 der Nabe 44 zu im Wesentlichen knickfrei fortsetzt. Durch den Flächenabschnitt 80, die Verbindungsfläche 74 und die Oberfläche 76 wird somit eine im Wesentlichen glatt durchlaufende, knickfreie und stufenfreie Oberfläche bereitgestellt, entlang welcher die durch die Förderkanäle 60 hindurchströmende Heizluft nach radial außen geführt wird.

## Patentansprüche

1. Heizluftförderrad für ein Fahrzeugheizgerät, umfassend eine Nabe (44) zur Festlegung des Heizluftförderrads (22) an einer Antriebswelle und einen in einem Übergangsbereich (48) an die Nabe (44) anschließenden Förderbereich (50) mit einer Mehrzahl von in Umfangsrichtung um eine Förderrad-Längsachse (L) aufeinanderfolgend angeordneten Förderschaufeln (36), wobei der Übergangsbereich (48) eine Mehrzahl von in Umfangsrichtung um die Förderrad-Längsachse (L) aufeinanderfolgenden Verbindungsstegen (66) umfasst,
**dadurch gekennzeichnet, dass** im Übergangsbereich (48) zwischen der Nabe (44), dem Förderbereich (50) und den Verbindungsstegen (66) gebildete Zwischenräume wenigstens teilweise mit Füllmaterial (72) gefüllt sind, und dass das Füllmaterial (72) einen größeren Elastizitätsmodul aufweist, als das Aufbaumaterial der Nabe (44) oder/und das Aufbaumaterial der Verbindungsstege (66) oder/und das Aufbaumaterial des Förderbereichs (56).

2. Heizluftförderrad nach Anspruch 1, **dadurch gekennzeichnet, dass** der Förderbereich (50) mit der Nabe (44) und den Verbindungsstegen (66) einteilig ausgebildet ist.

3. Heizluftförderrad nach Anspruch 1, **dadurch gekennzeichnet, dass** der Förderbereich (50) mit der Nabe (44) und den Verbindungsstegen (66) als Kunststoff-Gussteil, vorzugsweise aus thermoplastischem Elastomer-Aufbaumaterial, ausgebildet ist.

4. Heizluftförderrad nach einem der vorangehenden Ansprüche, **dadurch gekennzeichnet, dass** im Übergangsbereich (48) zwischen der Nabe (44), dem Förderbereich (50) und den Verbindungsstegen (66) gebildete Zwischenräume vollständig mit Füllmaterial (72) gefüllt sind.

5. Heizluftförderrad einem der vorangehenden Ansprüchen, **dadurch gekennzeichnet, dass** der Förderbereich (50) eine vermittels der Verbindungsstege (66) mit der Nabe (44) verbundene, schirmartig ausgebildete erste Wandung (52) mit einer zentralen Nabenanbindungsöffnung (64) und eine zur ersten Wandung (52) in axialem Abstand angeordnete, schirmartig ausgebildete zweite Wandung (54) mit einer zentralen Heizluftaufnahmeöffnung (56) umfasst, wobei die Förderschaufeln (36) sich zwischen der ersten Wandung (52) und der zweiten Wandung (54) von radial innen nach radial außen erstrecken, derart, dass durch jeweils zwei in Umfangsrichtung aufeinanderfolgende Förderschaufeln (36), die erste Wandung (52) und die zweite Wandung (56) ein zur Heizluftaufnahmeöffnung (56) offener Heizluftförderkanal (60) begrenzt ist.

6. Heizluftförderrad nach Anspruch 5, **dadurch gekennzeichnet, dass** die Nabe (44) sich durch die Nabenanbindungsöffnung (64) hindurch erstreckt.

7. Heizluftförderrad nach Anspruch 5 oder 6, **dadurch gekennzeichnet, dass** das Füllmaterial (72) eine der Heizluftaufnahmeöffnung (56) zugewandt orientierte, zwischen der Nabe (44) und der ersten Wandung (52) sich erstreckende Verbindungsfläche (74) bereitstellt, wobei die Verbindungsfläche (74) in ihrem radial äußeren Endbereich im Wesentlichen stufenfrei oder/und knickfrei an eine den Förderschaufeln (36) zugewandte Oberfläche (76) der ersten Wandung (52) anschließt oder/und in ihrem radial inneren Endbereich im Wesentlichen stufenfrei oder/und knickfrei an die Nabe (44), vorzugsweise an eine Außenumfangsfläche (70, 80) der Nabe (44), anschließt.

8. Fahrzeugheizgerät, umfassend einen Gebläsemotor (26) mit einer um eine Drehachse drehbaren Motorwelle (24), wobei an einem ersten axialen Endbereich der Motorwelle (24) ein Heizluftförderrad (22) nach einem der vorangehenden Ansprüche getragen ist.

9. Fahrzeugheizgerät nach Anspruch 8, **dadurch gekennzeichnet, dass** an einem zweiten axialen Endbereich der Motorwelle (24) ein Verbrennungsluftförderrad (18) getragen ist.

## Claims

1. Heating air conveyor wheel for a vehicle heating device, comprising a hub (44) to fix the heating air conveyor wheel (22) to a drive shaft and a conveyor area (50) adjacent to the hub (44) in a transition area (48) with a plurality of conveyor blades (36) arranged following one another about a conveyor wheel longitudinal axis (L) in the circumferential direction, wherein the transition area (48) comprises a plurality of connection webs (66) following one another about the conveyor wheel longitudinal axis (L) in the circumferential direction,
**characterized in that** in the transition area (48), intermediate spaces formed between the hub (44), the conveyor area (50) and the connection webs (66) are filled at least partly with filling material (72) and **in that** the filling material (72) has a greater modulus of elasticity than the material of which the hub (44) is made or/and than the material of which the connection webs (66) are made or/and than the material of which the conveyor area (56) is made.

2. Heating air conveyor wheel in accordance with claim 1, **characterized in that** the conveyor area (50) is made in one piece with the hub (44) and the connection webs (66).

3. Heating air conveyor wheel in accordance with claim 1, **characterized in that** the conveyor area (50) with the hub (44) and the connection webs (66) is configured as a molded plastic part, preferably one made of thermoplastic elastomer material.

4. Heating air conveyor wheel in accordance with one of the preceding claims, **characterized in that** in the transition area (48), intermediate spaces formed between the hub (44), the conveyor area (50) and the connection webs (66) are filled completely with filling material (72).

5. Heating air conveyor wheel in accordance with one of the preceding claims, **characterized in that** the conveyor area (50) comprises a first wall (52) adapted umbrella-like with a central hub connection opening (64) and which is connected to the hub (44) by means of the connection webs (66), and a second wall (54) adapted umbrella-like with a central heating air receiving opening (56) arranged at an axial distance to the first wall (52), the conveyor blades (36) extending from radially inwards to radially outwards between the first wall (52) and the second wall (54) such that a heating air conveyor duct, which is open to the heating air receiving opening (56), is defined by two conveyor blades (36) following one another in the circumferential direction, by the first wall (52) and by the second wall (56).

6. Heating air conveyor wheel in accordance with claim 5, **characterized in that** the hub (44) extends through the hub connection opening (64).

7. Heating air conveyor wheel in accordance with claim 5 or 6, **characterized in that** the filling material (72) provides a connecting surface (74) oriented facing the heating air receiving opening (56), extending between the hub (44) and the first wall (52), wherein the connecting surface (74) is connected in an essentially ridgeless or/and kink-free manner to a surface (76) of the first wall (52) facing the conveyor blades (36) in its radially outer end area, or/and in an essentially ridgeless or/and kink-free manner to the hub (44), preferably to an outer circumferential surface (70, 80) of the hub (44), in its radially inner end area.

8. Vehicle heating device, comprising a blower motor (26) with a motor shaft (24) rotatable about a rotation axis, wherein a heating air conveyor wheel (22) in accordance with one of the preceding claims is supported at a first axial end area of the motor shaft (24).

9. Vehicle heating device in accordance with claim 8, **characterized in that** a combustion air conveyor wheel (18) is supported at a second axial end area of the motor shaft (24).

## Revendications

1. Roue de transport d'air de chauffage pour un dispositif de chauffage de véhicule, comprenant un moyeu (44) pour fixer la roue de transport d'air de chauffage (22) sur un arbre d'entraînement et une zone de transport (50) adjacente au moyeu (44) dans une zone de transition (48) avec une pluralité de lames de transport (36) disposées les unes derrière les autres dans la direction périphérique autour d'un axe longitudinal de roue de transport (L), où la zone de transition (48) comprend plusieurs traverses de liaison (66) se suivant autour de l'axe longitudinal de roue de transport (L) dans la direction périphérique,
**caractérisé en ce que** dans la zone de transition (48), des espaces intermédiaires formés entre le moyeu (44), la zone de transport (50) et les traverses de liaison (66) sont remplis au moins partiellement de matériau de remplissage (72) et **en ce que** le matériau de remplissage (72) a un module d'élasticité supérieur à celui du matériau dont le moyeu (44) est fait et/ou à celui du matériau dont les traverses de liaison (66) sont faites ou/et de celui du matériau dont la zone de transport (56) est faite.

2. Roue de transport d'air de chauffage selon la revendication 1, **caractérisée en ce que** la zone de transport (50) est réalisée en une seule pièce avec le moyeu (44) et les traverses de liaison (66).

3. Roue de transport d'air de chauffage selon la revendication 1, **caractérisée en ce que** la zone de transport (50) avec le moyeu (44) et les traverses de liaison (66) est réalisée sous forme de pièce moulée en matière plastique, de préférence par un matériau d'élastomère thermoplastique.

4. Roue de transport d'air de chauffage selon l'une des revendications précédentes, **caractérisée en ce que** dans la zone de transition (48), des espaces intermédiaires formés entre le moyeu (44), la zone de transport (50) et les traverses de liaison (66) sont remplis complètement de matériau de remplissage (72).

5. Roue de transport d'air de chauffage selon l'une des revendications précédentes, **caractérisée en ce que** la zone de transport (50) comprend une première paroi (52) adaptée en parapluie avec une ouverture centrale de raccordement de moyeu (64), reliée au moyeu (44) par l'intermédiaire des traverses de liaison (66), et une deuxième paroi (54) adaptée en parapluie avec une ouverture centrale de réception d'air de chauffage (56) disposée à une distance axiale de la première paroi (52), les lames de transport (36) s'étendant de radialement à l'intérieur vers radialement à l'extérieur entre la première paroi (52) et la deuxième paroi (54) de sorte qu'un conduit de transport d'air de chauffage, qui est ouvert à l'ouverture de réception d'air de chauffage (56), est défini par deux lames de transport (36) successives dans la direction périphérique, la première paroi (52) et la deuxième paroi (56).

6. Roue de transport d'air de chauffage selon la revendication 5, **caractérisée en ce que** le moyeu (44) s'étend à travers l'ouverture de raccordement de moyeu (64).

7. Roue de transport d'air de chauffage selon la revendication 5 ou 6, **caractérisée en ce que** le matériau de remplissage (72) présente une surface de liaison (74) orientée vers l'ouverture de réception d'air de chauffage (56), s'étendant entre le moyeu (44) et la première paroi (52), dans laquelle la surface de liaison (74) est reliée dans sa zone d'extrémité radialement extérieure de manière essentiellement sans arêtes et/ou sans plis à une surface (76) de la première paroi (52) tournée vers les lames de transport (36), et/ou dans sa zone d'extrémité radialement intérieure de manière essentiellement sans arêtes et/ou sans plis au moyeu (44), de préférence à une surface périphérique extérieure (70, 80) du moyeu (44).

8. Dispositif de chauffage de véhicule, comprenant un moteur de soufflerie (26) avec un arbre de moteur (24) pouvant tourner autour d'un axe de rotation, dans lequel une roue de transport d'air de chauffage (22) selon l'une des revendications précédentes est supportée sur une première zone d'extrémité axiale de l'arbre de moteur (24).

9. Dispositif de chauffage de véhicule selon la revendication 8, **caractérisé en ce qu'**une roue de transport d'air de combustion (18) est supportée sur une deuxième zone d'extrémité axiale de l'arbre de moteur (24).
